# EUROPEAN PATENT APPLICATION

(11) **EP 2 458 855 A1**
(43) Date of publication of application: **30.05.2012**
(21) Application number: 09849390.1
(22) Date of filing: 24.12.2009
(51) Int. Cl.: H04N 7/173

(54) **METHOD, SYSTEM AND DEVICE FOR REAL-TIME CONTROL OF PPV (PAY PER VIEW) SERVICE**

(30) Priority: 18.09.2009 CN 200910093337
(71) Applicant: ZTE Corporation, Shenzhen, Guangdong 518057 (CN)
(72) Inventor: JI, Feng, Shenzhen Guangdong 518057 (CN)
(74) Representative: Manitz, Gerhart
(86) International application number: PCT/CN2009/075997
(87) International publication number: WO 2011/032339

(57) **Abstract**

A method and a system for real-time control of a Pay per View (PPV) service are disclosed in the present invention. The method includes: an Internet protocol television service control function (IPTV SCF) entity confirming that there is a PPV program that is not subscribed by a user on a current live channel according to a live session establishment request sent from a user terminal; and the IPTV SCF entity notifying the user terminal to subscribe the PPV program that is not subscribed. A device for real-time control of PPV service is also disclosed in the present invention. With the present invention, the users are enabled to subscribe and view the PPV program in real time, thereby improving the user's experience.

## Description

### Technical Field

The present invention relates to the field of the Internet Protocol Television (IPTV), and more particularly, to a method, a system and a device for real-time control of a Pay per View (PPV) service.

### Background of the Related Art

The IPTV technology, which is based on the IP Multimedia Subsystem (IMS) network, provides abundant video and audio services for users, such as live channels, and programs on-demand, and so on. In the traditional digital TV, the PPV television service is provided on live channels, and generally, the service in the digital TV is paid per view on the basis of the entire channels.

So far, since there is no real-time control about the PPV program in the IPTV service procedure, users cannot subscribe and view the PPV program in real time based on the current IPTV service procedure; and if a user wants to view the PPV program, the user needs to subscribe the PPV program in advance, for example the user can subscribe the PPV program that requires viewing in advance at the operator's customer center, which deteriorate the user's experience.

### Summary of the Invention

In view of this, the main object of the present invention is to provide a method, a system and a device for real-time control of a PPV service, which enable users to subscribe and view the PPV program in real time, thereby improving the user's experience.

To achieve the aforementioned object, the technical scheme of the present invention is implemented as follows.

The present invention provides a method for real-time control of a pay per view (PPV) service, and the method comprises:
an Internet protocol television service control function (IPTV SCF) entity confirming that there is a PPV program that is not subscribed by a user on a current live channel according to a live session establishment request sent by a user terminal; and
the IPTV SCF entity notifying the user terminal to subscribe the PPV program that is not subscribed.

In the above method, the live session establishment request at least includes a user profile and a live channel identifier;
the method further comprises: the user terminal sending the live session establishment request to the IPTV SCF entity via a Core IP Multimedia Subsystem (Core IMS).

The IPTV SCF entity confirming that there is the PPV program that is not subscribed by the user on the current live channel comprises:
the IPTV SCF entity acquiring a program playlist of the live channel from an IPTV application server according to the live channel identifier included in the live session establishment request;
the IPTV SCF entity acquiring information of a PPV program subscribed by the user from a user profile server function entity according to the user profile included in the live session establishment request; and
the IPTV SCF entity confirming that there is the PPV program that is not subscribed by the user on the live channel according to the program playlist and the information of the PPV program subscribed by the user.

The IPTV SCF entity notifying the user terminal to subscribe the PPV program that is not subscribed comprises:
the IPTV SCF entity acquiring a subscription Uniform Resource Locator (URL) of the PPV program that is not subscribed at a specific time and notifying the user terminal to subscribe the PPV program that is not subscribed;
wherein the specific time is: when the IPTV SCF entity confirms that there is a PPV program that is not subscribed by the user on the current live channel, a timer is set according to a start time of the PPV program, and a time-out time of the timer is the specific time.

The IPTV SCF entity acquiring the subscription URL of the PPV program that is not subscribed comprises: the IPTV SCF entity acquiring the subscription URL of the PPV program that is not subscribed by the user from an IPTV application server;
the IPTV SCF entity notifying the user terminal to subscribe the PPV program that is not subscribed comprises: the IPTV SCF entity sending a message including the subscription URL to the user terminal via a Core IMS, and the user terminal subscribing the PPV program that is not subscribed according to the subscription URL.

The method further comprises:
the user terminal continuing to viewing the PPV program on the live channel when the user terminal successfully subscribes the PPV program according to the subscription URL;
the user terminal leaving a multicast group corresponding to the live channel when the user terminal fails to subscribe the PPV program according to the subscription URL.

When the user terminal needs to play back to view a program that has been watched on the live channel, the method further comprises:
the IPTV SCF entity acquiring a border point of the PPV program on the live channel from an IPTV application server according to a live session adjustment request sent by the user terminal;
the IPTV SCF entity sending the border point of the PPV program to a Cluster Controller (CC) via the live session adjustment request; and
the CC confirming the border point of the PPV program which is a max time shift time to which the user can play back.

The IPTV SCF entity acquiring the border point of the PPV program comprises:
the IPTV SCF entity confirming an end time of a last PPV program in a program playlist of programs that have already been played, and taking the end time as the border point of the PPV program.

The CC confirming the time shift border point comprises:
the CC confirming the time shift border point according to a current time and a preset live channel allowable maximum duration for storing the programs that have been played.

The CC confirming the program time to which the user plays back comprises: comparing the border point of the PPV program with the time shift border point, and taking a closer one to the current time as the program time to which the user can play back.

The present invention further provides a system for real-time control of a PPV service, and the system comprises: a user terminal and an IPTV SCF entity, wherein
the user terminal is configured to: send a live session establishment request to the IPTV SCF entity;
the IPTV SCF entity is configured to: confirm that there is a PPV program that is not subscribed by a user on a current live channel according to the live session establishment request; and is also configured to: notify the user terminal to subscribe the PPV program that is not subscribed.

The IPTV SCF entity is further configured to: acquire a subscription URL of the PPV program that is not subscribed, and notify the user terminal to subscribe the PPV program that is not subscribed according to the subscription URL; correspondingly, the system further comprises:
an IPTV application server, which is configured to: provide the subscription URL of the PPV program that is not subscribed to the IPTV SCF entity; and is also configured to: provide a program playlist of the live channel to the IPTV SCF; and
a user profile server function entity, which is configured to: provide information of a PPV program that is subscribed by the user to the IPTV SCF entity;
correspondingly, the IPTV SCF entity is further configured to: confirm that there is the PPV program not subscribed by the user on the live channel according to the program playlist and the information of the PPV program that is subscribed by the user.

The system further comprises:
a Core IMS, which is configured to: send the live session establishment request from the user terminal to the IPTV SCF entity, and is also configured to: send a message including the subscription URL sent from the IPTV SCF entity to the user terminal, so as to notify the user to subscribe the PPV program that is not subscribed.

When the user terminal needs to play back to view a program that has already been played on the live channel, the method further comprises: a CC, wherein
correspondingly, the IPTV SCF entity is further configured to: acquire a border point of the PPV program on the live channel from the IPTV application server, and send the border point of the PPV program to the CC;
the CC is configured to: determine a time shift border point, and confirm a program time to which the user plays back according to the border point of the PPV program.

The present invention further provides a device for real-time control of a PPV service, and the device comprises:
an analysis module, which is configured to: receive a live session establishment request sent from a user terminal, and confirm that there is a PPV program that is not subscribed by a user on a current live channel according to the live session establishment request; and
a processing module, which is configured to: notify the user terminal to subscribe the PPV program that is not subscribed.

In the scheme for real-time control of the PPV service in accordance with the present invention, when a user requests a live channel, it is confirmed that there is a PPV program on the live channel via the IPTV service control function entity, and then at a specific time, the user is notified to subscribe the PPV program; in the case that the user is switched from the live state to the time shift state, the time shift border is controlled by the IPTV service control function entity; therefore, the user can subscribe and view the PPV program in real time, and the user's experience is improved.

### Brief Description of Drawings

FIG. 1 is a structural diagram of an IPTV system;
FIG. 2 is a flow chart of a method for real-time control of the PPV service in accordance with the present invention;
FIG. 3 is a flow chart of a method for real-time control of the PPV service in accordance with embodiment 1 of the present invention;
FIG. 4 is a flow chart of a method for real-time control of the PPV service in accordance with embodiment 2 of the present invention;
FIG. 5 is a flow chart of a method for real-time control of the PPV service in accordance with embodiment 3 of the present invention;
FIG. 6 is a structural relationship diagram of a system for real-time control of the PPV service in accordance with the present invention;
FIG. 7 is a structural relationship diagram of a device for real-time control of the PPV service in accordance with the present invention.

### Preferred Embodiments of the Present Invention

The technical scheme of the present invention will be further illustrated in detail in combination with the accompanying drawings and specific embodiments in the following.

The scheme for real-time control of the PPV service in accordance with the present invention confirms that there is a PPV program on a live channel via an IPTV service control function entity when a user requests the live channel, and then notifies the user to subscribe the PPV program at a specific time; and controls the time shift border via the IPTV service control function entity in the case that the user is switched from the live state to the time shift state,.

When viewing a video program on a live channel, a user needs to join in a multicast group, and all the users in the multicast can use the live channel to view the program in common, that is, the relationship between the video source corresponding to the live channel at the network side and the users in the multicast group is an one-to-multiple relationship, and the program viewed by the user via the live channel is real-time, and thus this state is named as the live state; when being switched from the live state to the time shift state, the user needs to leave the multicast group, and to establish a one-to-one relationship with the video source corresponding to the current live channel, and at this time the program viewed by the user is not real time.

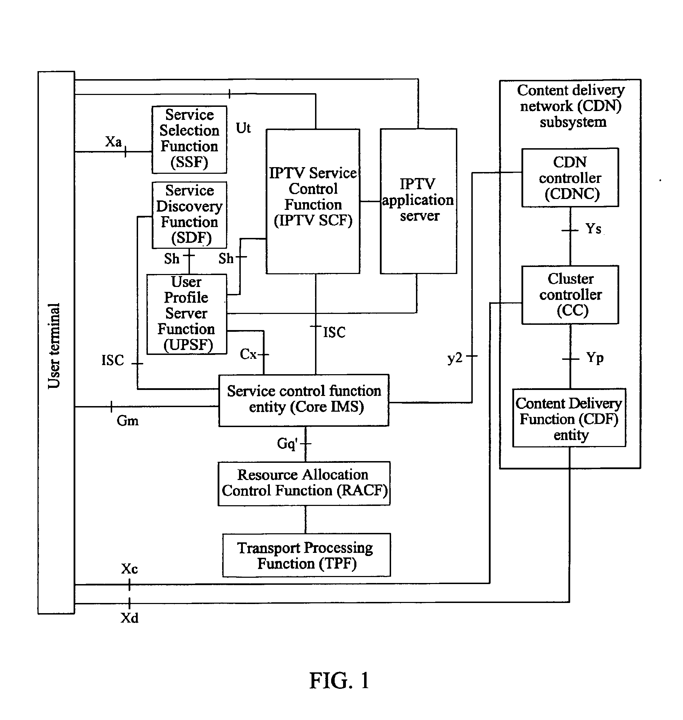

The IPTV system which is adaptable to the scheme for real-time control of the PPV service in accordance with the present invention is shown in FIG. 1, comprising: a user terminal, an IPTV service control function entity, a user profile server function entity, a Content Delivery Network (CDN) subsystem, a service selection function entity, a service discovery function entity, a service control function entity, a transport processing function entity, and a resource allocation control function entity.

The service control function entity is the Core IP Multimedia Subsystem (IMS) when the IPTV system in the present invention is based on the next generation network, namely the IMS network.

The IPTV Service Control Function (IPTV SCF) entity mainly provides the service authentication at the session initial stage, determines whether a user is allowed to use the corresponding services or not according to the user's IPTV service list, performs the credit control, and selects the corresponding IPTV media function. The IPTV SCF entity can be considered as the Session Initiation Protocol (SIP) application server in architecture of the next generation network. The IPTV SCF entity interacts with the Core IMS via an ISC interface; and the user terminal and the IPTV SCF entity exchange session related information via the Core IMS. The user terminal might also configure the IPTV service list via the Ut interface.

The CDN subsystem is responsible for signaling control of the on-demand services and the media stream transmission, and it comprises: a CDN Controller (CDNC), a Cluster Controller (CC), and a Content Delivery Function (CDF) entity. When a user triggers the on-demand service, the IPTV SCF entity routes the SIP message to the CDNC through the Core IMS (an Y2 interface), and the CDNC selects one of the CCs administered by the CDNC according to the SIP message; the main function of the CC is: selecting one of the CDF entities administered by the CC to provide the specific media stream data (e.g., transmitted in a way of the RTP), and is also used to deal with the control signaling (e.g., the RTSP command) during the play-back process.

The IPTV application server provides a basic IPTV server display interface, and provides a Web interface for the user subscribing in the present invention.

The transport processing function entity mainly provides the media stream data of the live channel for a user terminal.

The resource allocation control function entity mainly implements to provide functions such as the basic policy control, resource reservation, and acceptance control and so on.

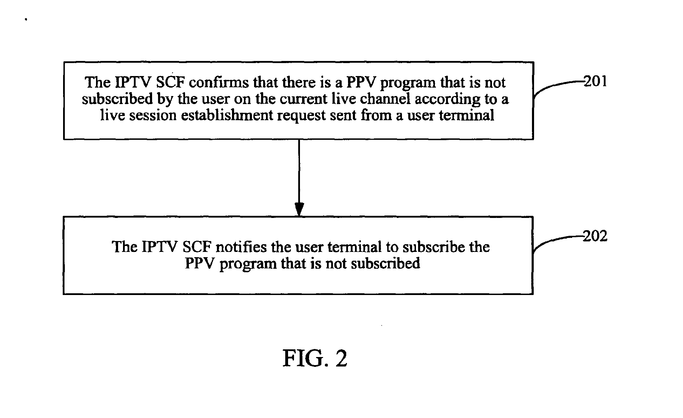

Based on the structural diagram of the IPTV system shown in FIG. 1, the procedure of the method for real-time control of the PPV service in accordance with the present invention is shown in FIG. 2, and the method comprises following steps.

Step 201: the IPTV SCF entity confirms that there is a PPV program that is not subscribed by a user on the current live channel according to a live session establishment request sent by a user terminal.

Step 202: the IPTV SCF entity notifies the user terminal to subscribe the PPV program that is not subscribed.

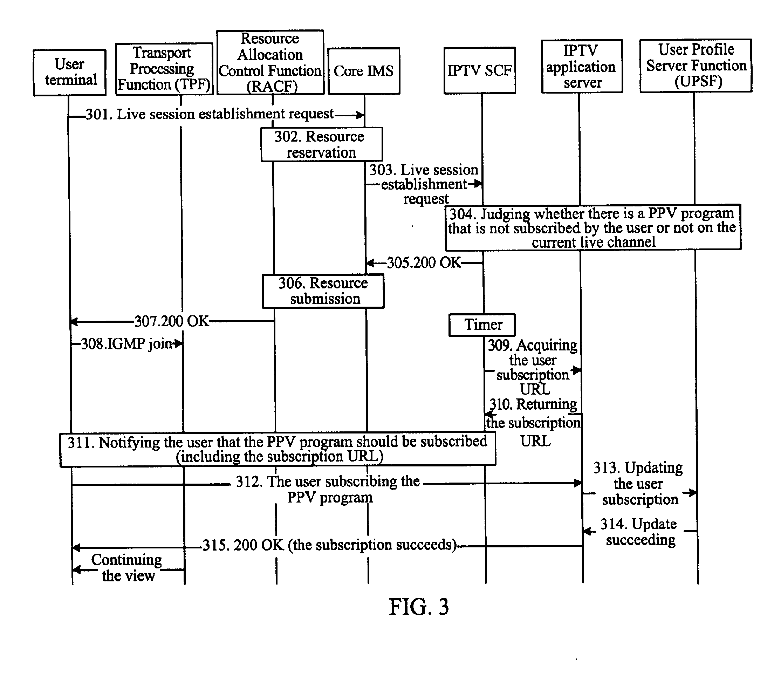

The scheme for real-time control according to the present invention will be illustrated with specific embodiments in the following. FIG. 3 shows a procedure of the method for real-time control of the PPV service according to the embodiment 1, and the procedure is adaptable to the case that the user terminal requests the live channel. As shown in FIG.3, this procedure comprises following steps.

Step 301, the user terminal sends a live session establishment request to the Core IMS.

When the user needs to view a live program, the user sends a live session establishment request including a live channel identifier to the Core IMS via the user terminal, and the live channel is the one where the program that the user wants to view is situated.

Step 302, the Core IMS cooperates with the resource allocation control function entity to perform the resource reservation operation according to the live session establishment request.

The aforementioned live session establishment request also includes the information of the resource, namely the network bandwidth requested by the user, needed by the user when viewing the program on the live channel. The Core IMS cooperates with the resource allocation control function entity according to the network bandwidth requested by the user to perform the resource reservation on the current live channel, i.e., reserving the network bandwidth whose size is the same as that requested by the user, so as to be used for subsequently playing the media stream.

Step 303, the Core IMS forwards the live session establishment request to the IPTV SCF entity.

Step 304, the IPTV SCF entity judges whether there is a PPV program that is not subscribed by the user or not on the current live channel.

The Core IMS forwards the live session establishment request to the IPTV SCF entity, and the IPTV SCF entity checks whether there is the PPV program or not on this live channel according to this live session establishment request and confirms the subscription condition of PPV programs of this user.

The IPTV application server might provide a program playlist, and the IPTV SCF entity is able to acquire the program playlist of the current live channel according to the live channel identifier, so as to judge whether there is the PPV program, including the PPV program that is played and the PPV program to be played on this live channel, or not on this live channel; preferably, a field for denoting the program attribute can be set in the playlist, and it can be learned whether a video program is a PPV program or not with this field; the specific value of the field can be set as needed.

The user profile server function entity stores the user profile, including the user identity information, and the subscription condition of PPV programs of this user, and so on, and therefore, the IPTV SCF entity is able to acquire the subscription condition of PPV programs of this user, including whether the user subscribes the PPV program or not and the subscribed PPV program information (the program name, etc.) by inquiring the user profile server function entity according to the user profile (the user's identity, etc.) included in the live session establishment request.

The IPTV SCF entity can determine whether there is the PPV program on this live channel or not and whether there is PPV program subscribed or not subscribed by the user or not in combination with the playlist provided by the IPTV application server and the user profile provided by the user profile server function entity.

Step 305, the IPTV SCF entity returns a 200 OK response to the Core IMS to notify the Core IMS that the live session has been established.

In the present invention, after receiving the live session establishment request, the IPTV SCF entity not only should check whether there is the PPV program on the current live channel or not and confirms the subscription condition of PPV programs of the user, but also needs to establish a live session based on this live channel, and returns a 200 OK response to the Core IMS after establishing the live session successfully.

Step 306, the Core IMS and the resource allocation control function entity cooperate to submit the resource.

The Core IMS and the resource allocation control function entity submit the resource, that is, allocate the requested network bandwidth for this user on the current live channel, and step 307 is performed, in which a 200 OK response is returned to the user terminal to inform the user terminal that the resource is ready.

Step 308, the user terminal sends an Internet Group Management Protocol (IGMP) join message to the transport processing function entity.

Once the user terminal learns that the resource is ready, it immediately sends the IGMP join message to the transport processing function entity to join in the current multicast group, that is, the multicast group corresponding to this live channel, so as to become a user of this multicast group, and therefore, the transport processing function entity can send the media stream (that is, the video program data stream on this live channel) corresponding to this live channel to this user terminal which belongs to this multicast group.

Since the programs on the live channel can only be played to the user terminals that belong to the multicast group corresponding to the live channel, the user terminal cannot view the programs on the live channel until joining in this multicast group.

It should be pointed out that the media stream sent by the transport processing function entity to the user terminal in this step includes: the media stream of a PPV program that can be played with the live channel and the media stream of a non-PPV program.

The following steps 309∼315 are optional steps. Steps 309∼315 are a procedure related to subscribing the PPV program, and therefore, if it is confirmed that there is no PPV program on the current live channel or there is a subscribed PPV program in step 304, the user does not need to subscribe a PPV program on the current live channel, or the subscription procedure does not require executing; if there is PPV program that is a program that the user has not subscribed on the current live channel, the subscription procedure of steps 309∼315 is performed.

It should be pointed out that the IPTV SCF entity confirms in step 304 that there is a PPV program on the current live channel and confirms that the PPV program has not been subscribed by this user, then the IPTV SCF entity sets a timer according to the start time of this PPV program, and when the timer is time-out (this time is the specific time), the IPTV SCF entity interacts with the IPTV application server to acquire the subscription URL of this PPV program. Specifically, the duration of the timer might be set according to the IPTV strategy or as needed.

For example, the current time is 9:00, the IPTV SCF entity confirms that there is a PPV program that is not subscribed by the user on the current live channel, and the start time of the PPV program is 10:00, then the timer can be set at once as needed, and the time-out time of the timer is 10:05 (this case is that the user is firstly allowed to view the PPV program for 5 minutes and then is notified to subscribe), then the IPTV SCF entity interacts with the IPTV application server at 10:05 to acquire the subscription Uniform Resource Locator (URL) of this PPV program; alternatively, the timer can be set when playing the PPV program, and the duration of the timer is 5 minutes as needed, that is, the IPTV SCF entity interacts with the IPTV application server at the time when the PPV program is played for 5 minutes to acquire the subscription URL of this PPV program.

If the purpose of acquiring the subscription URL of this PPV program is to notify the user to subscribe the PPV program and to inform the user of the subscription URL of this PPV program, the procedure is performed as described in steps 310∼311: the IPTV server returns the subscription URL of the current PPV program to the IPTV SCF entity; the IPTV SCF entity sends a message (including the subscription URL) to the user terminal via the Core IMS to notify the user to subscribe the PPV program.

Step 312, the user subscribes the PPV program based on the IPTV application server according to the subscription URL.

Preferably, the message for notifying the user to subscribe is displayed on the user terminal in the form of the Web interface, and the user might click the subscription URL on this interface to enter the subscription interface provided by the IPTV application server to subscribe the PPV program.

Step 313, the IPTV application server updates the subscription information of the user in the user profile server function entity.

Step 314, the user profile server function entity returns the update success message to the IPTV application server after the update succeeding.

Step 315, the IPTV application server returns a 200 OK to the user terminal to inform the user of subscription success of this PPV program, and then the user can continue to view this PPV program.

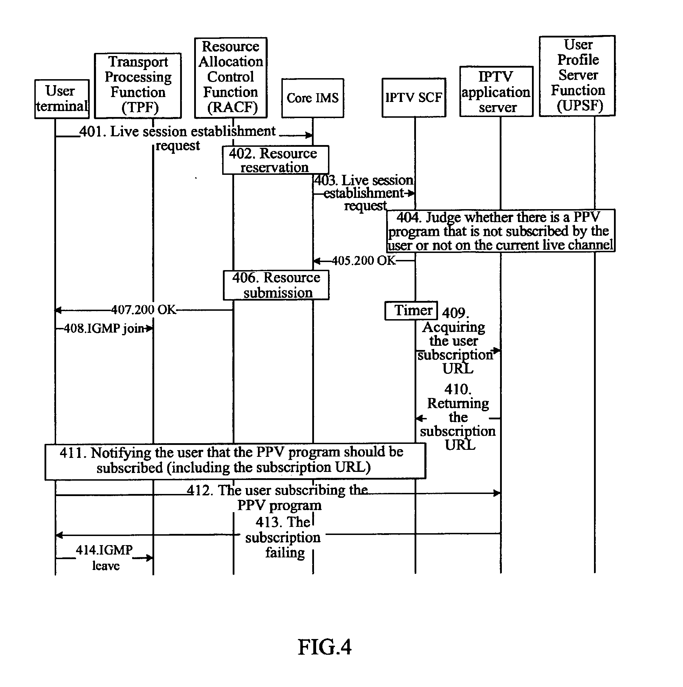

FIG. 4 shows a flow chart of the method for real-time control of the PPV service according to embodiment 2, the difference between this procedure and the one shown as FIG. 3 is in that: the user successfully subscribes the PPV program in the procedure shown in FIG. 3; while the procedure shown in FIG. 4 illustrates that the user subscribing the PPV program is failure.

The processing in steps 401∼412 is the same as that in steps 301∼312, and is not repeated herein.

Steps 413∼414, when the user subscribing the PPV program is failure due to the network factor or other factors, the IPTV application server informs the user terminal that the subscription fails; at this time, the user terminal sends an IGMP leave message to the transport processing function entity to leave the multicast group corresponding to this live channel. Since the program played on the current live channel is the PPV program but the user cannot view this program if the user subscribing the program fails, the user can leave this live channel and select other channels to view other programs.

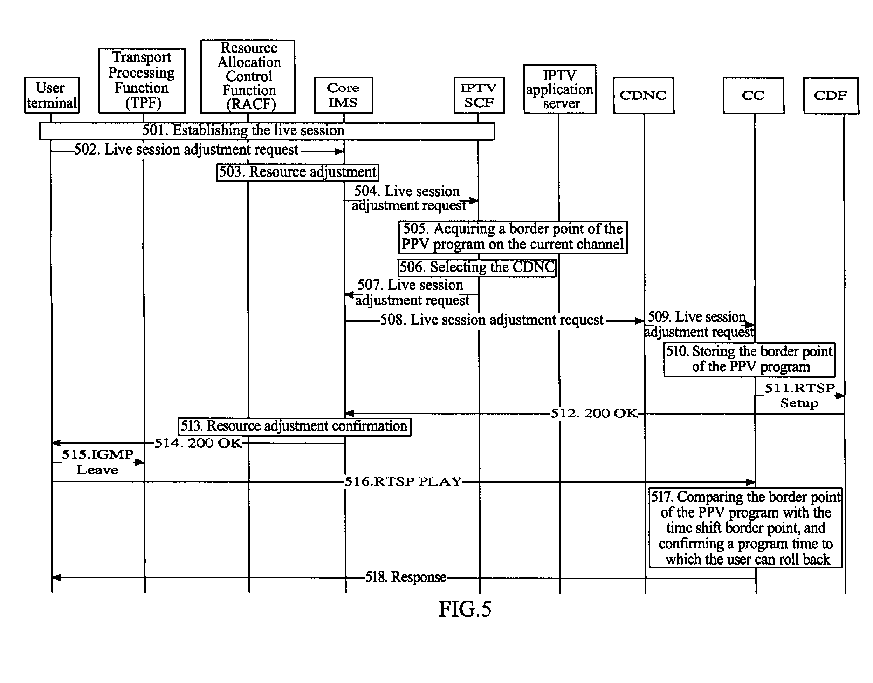

FIG. 5 shows a flow chart of the method for real-time control of the PPV service according to embodiment 3, and this procedure can apply to the case that the user terminal requests to be switched from the live state to the time shift state. As shown in FIG. 5, the procedure comprises following steps.

Step 501, a live session is established, and this step corresponds to steps 301∼308 in FIG. 3.

Step 502, the user terminal sends a live session adjustment request to the Core IMS.

When the user is in the live state, that is, the user is viewing the program on the live channel, and if the user is switched to the time shift state as needed (for example the user needs to view the program which has already been played on the current live channel), firstly, the user needs to send a live session adjustment request to the Core IMS. The live session adjustment request can be used to denote that the user requests to be switched to the time shift state, and the live session adjustment message includes the resource, namely the network bandwidth, required by the user for being switching to the time shift state.

Step 503, the Core IMS cooperates with the resource allocation function entity to adjust the resource.

The network bandwidth is adjusted based on the current live channel according to the network bandwidth required in the time shift state requested by the user to prepare for the user being switching from the live state to the time shift state.

Step 504, the Core IMS forwards the live session adjustment request to the IPTV SCF entity.

Step 505, the IPTV SCF entity confirms the border point of the PPV program on the current live channel according to this live session adjustment request.

The end time of the last PPV program in the programs that have already been played can be confirmed based on the program playlist of the current live channel, and the end time is the border point of the PPV program.

Step 506, the IPTV SCF entity selects a CDNC, and the implementation is known in the art herein and is not repeated.

Steps 507-509, the IPTV SCF entity sends the live session adjustment request including information of the border point of the PPV program to the Core IMS; then the Core IMS sends the live session adjustment request to the CC via the selected CDNC.

Step 510, the CC stores the information of the border point of the PPV program on the current live channel in the live session adjustment request.

Step 511, the CC sends the Real Time Streaming Protocol (RTSP) Setup signaling to the CDF entity to notify the CDF entity to establish the signaling channel in the time shift state so as to control the data channel (transmitting the stream media data) in the time shift state.

Step 512, the CDF entity returns the 200 OK response to the CC after completing to establish the signaling channel; and the CC returns the 200 OK response to the Core IMS via the CDNC and IPTV SCF entity.

Step 513, the Core IMS cooperates with the resource allocation function entity to confirm the resource adjustment, that is, regarding to the resource request in step 503, it confirms here that the resource, namely the network bandwidth, requested by the user has been allocated, and the step 514 is performed, in which the Core IMS returns the 200 OK response to the user terminal.

Step 515, the user terminal sends an IGMP Leave message to the transport processing function entity to leave the multicast group corresponding to the current live channel. Since the user needs to be switched to the time shift state in which the relationship between the user terminal and the video resource (the video resource corresponding to the current live channel) at the network side is an one-to-one relationship, therefore when being switched to the time shift state, the user must leave the current multicast group first and then enters the time shift state.

Step 516, the user terminal sends a RTSP PLAY message to the CC through the signaling channel to inform the CC that the user terminal needs to view the program which has already been played on the current live channel, that is, the user needs to paly back to view the program that has already been played.

Step 517, the CC compares the stored border point of the PPV program with the time shift border point to confirm the program time to which the user might play back.

In practical applications, the real-time program played on the live channel would be recorded and stored for a certain time period so that the user can view the program on demand whenever necessary; at this moment, the user can play back to a certain time to view the program that has been played already on this live channel.

The time shift border point might be determined according to the current live channel allowable maximum duration for storing the program that has been played, for example, the current time is 10:00, and the maximum duration is 3 hours, and then the time shift border point is 7:00, that is, the current live channel is only able to store the program content in the last 3 hours.

The border point of the PPV program is compared with the time shift border point, and the time shift border point closest to the current time is taken as the program time to which the user might play back.

For example, the current time is 10:00, it is assumed that the current live channel allowable maximum duration for storing the program that has been played is 3 hours, and then the time shift border point is 7:00; if the last border point of the PPV program on the current live channel is 6:00, then the program time to which the user might play back is 7:00; and if the border point of the PPV program on the current live channel is 8:00, then the program time to which the user might play back is 8:00.

Step 518, the CC returns the program time to which the user might play back to the user terminal, and then the user is able to view the program after this time.

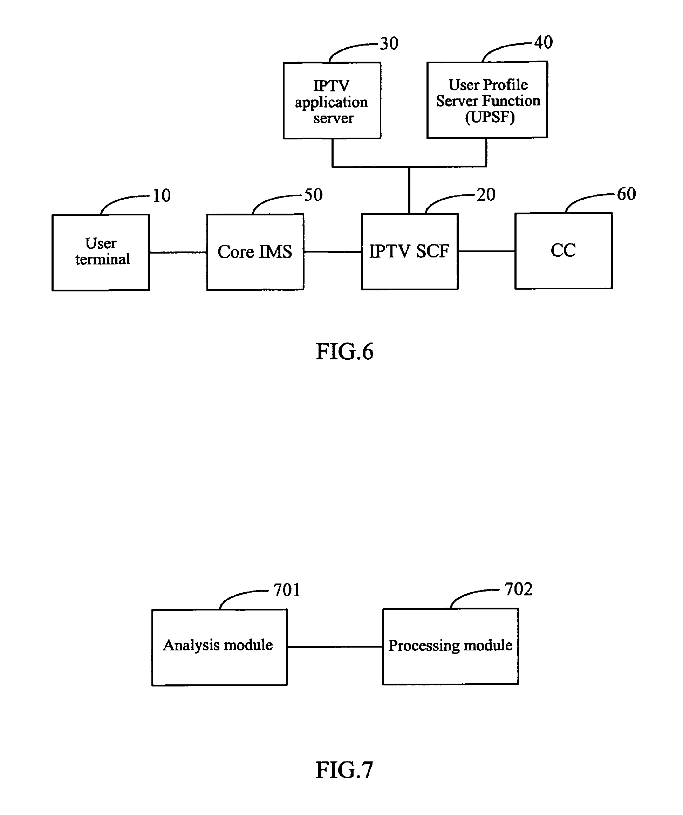

In order to implement the aforementioned control method, the present invention further provides a control system. As shown in FIG.6, the system comprises: a user terminal 10 and an IPTV SCF entity 20, wherein,
the user terminal 10 is configured to: send a live session establishment request to the IPTV SCF entity 20;
the IPTV SCF entity 20 is configured to: confirm that there is a PPV program that is not subscribed by the user on the current live channel according to the live session establishment request, and is also configured to: notify the user terminal 10 to subscribe the PPV program that is not subscribed.

The IPTV SCF entity 20 is further configured to: acquire the subscription URL of the PPV program that is not subscribed, and notify the user terminal 10 to subscribe the PPV program that is not subscribed according to the subscription URL;
correspondingly, the system further comprises:
a IPTV application server 30, which is configured to: provide the subscription URL of the PPV program that is not subscribed to the IPTV SCF entity 20; and is also configured to: provide the program playlist of the live channel to the IPTV SCF entity 20; and
a user profile server function entity 40, which is configured to: provide the information of the PPV programs that has been subscribed by the user to the IPTV SCF entity 20;
correspondingly, the IPTV SCF entity 20 is further configured to: confirm that there is the PPV program that is not subscribed by the user on the live channel according to the program playlist and the information of the PPV programs that has been subscribed by the user.

This system further comprises:
a Core IMS 50, which is configured to: send the live session establishment request from the user terminal 10 to the IPTV SCF entity 20, and is also configured to: send the message including the subscription URL from the IPTV SCF entity 20 to the user terminal 10, so as to notify the user to subscribe the PPV program that is not subscribed.

When the user terminal 10 needs to play back to view the program that has already been played on the live channel, this system further comprises: a CC 60,
correspondingly, the IPTV SCF entity 20 is further configured to: acquire the border point of the PPV program on the live channel from the IPTV application server 30, and send the border point of the PPV program to the CC 60;
the CC 60 is configured to: determine the time shift border point and determine the program time to which the user plays back according to the border point of the PPV program.

The present invention further provides a device for real-time control of the PPV service, and this device adapts to the IPTV SCF entity, its internal structure is shown in FIG. 7, and comprises:
an analysis module 701, which is configured to: receive the live session establishment request sent from the user terminal and confirm that there is a PPV program that is not subscribed by the user on the current live channel according to the live session establishment request;
a processing module 702, which is configured to: notify the user terminal to subscribe the PPV program that is not subscribed.

The above description is only the preferred embodiments of the present invention, and is not intended to limit the present invention.

## Claims

1. A method for real-time control of a pay per view (PPV) service, comprising:
an Internet protocol television service control function (IPTV SCF) entity confirming that there is a PPV program that is not subscribed by a user on a current live channel according to a live session establishment request sent by a user terminal; and
the IPTV SCF entity notifying the user terminal to subscribe the PPV program that is not subscribed.

2. The method of claim 1, wherein the live session establishment request at least includes a user profile and a live channel identifier;
the method further comprises: the user terminal sending the live session establishment request to the IPTV SCF entity via a Core IP Multimedia Subsystem (Core IMS).

3. The method of claim 2, wherein the IPTV SCF entity confirming that there is the PPV program that is not subscribed by the user on the current live channel comprises:
the IPTV SCF entity acquiring a program playlist of the live channel from an IPTV application server according to the live channel identifier included in the live session establishment request;
the IPTV SCF entity acquiring information of a PPV program subscribed by the user from a user profile server function entity according to the user profile included in the live session establishment request; and
the IPTV SCF entity confirming that there is the PPV program that is not subscribed by the user on the live channel according to the program playlist and the information of the PPV program subscribed by the user.

4. The method of claim 1, wherein the IPTV SCF entity notifying the user terminal to subscribe the PPV program that is not subscribed comprises:
the IPTV SCF entity acquiring a subscription Uniform Resource Locator (URL) of the PPV program that is not subscribed at a specific time and notifying the user terminal to subscribe the PPV program that is not subscribed;
wherein the specific time is: when the IPTV SCF entity confirms that there is a PPV program that is not subscribed by the user on the current live channel, a timer is set according to a start time of the PPV program, and a time-out time of the timer is the specific time.

5. The method of claim 4, wherein
the IPTV SCF entity acquiring the subscription URL of the PPV program that is not subscribed comprises: the IPTV SCF entity acquiring the subscription URL of the PPV program that is not subscribed by the user from an IPTV application server;
the IPTV SCF entity notifying the user terminal to subscribe the PPV program that is not subscribed comprises: the IPTV SCF entity sending a message including the subscription URL to the user terminal via a Core IMS, and the user terminal subscribing the PPV program that is not subscribed according to the subscription URL.

6. The method of any one of claims 1 to 5, further comprising:
the user terminal continuing to viewing the PPV program on the live channel when the user terminal successfully subscribes the PPV program according to the subscription URL;
the user terminal leaving a multicast group corresponding to the live channel when the user terminal fails to subscribe the PPV program according to the subscription URL.

7. The method of claims 6, when the user terminal needs to play back to view a program that has been watched on the live channel, further comprising:
the IPTV SCF entity acquiring a border point of the PPV program on the live channel from an IPTV application server according to a live session adjustment request sent by the user terminal;
the IPTV SCF entity sending the border point of the PPV program to a Cluster Controller (CC) via the live session adjustment request; and
the CC confirming the border point of the PPV program which is a max time shift time to which the user can play back.

8. The method of claim 7, wherein the IPTV SCF entity acquiring the border point of the PPV program comprises:
the IPTV SCF entity confirming an end time of a last PPV program in a program playlist of programs that have already been played, and taking the end time as the border point of the PPV program.

9. The method of claim 7, wherein the CC confirming the time shift border point comprises:
the CC confirming the time shift border point according to a current time and a pre-set live channel allowable maximum duration for storing the programs that have been played.

10. The method of claim 7, wherein the CC confirming the program time to which the user plays back comprises: comparing the border point of the PPV program with the time shift border point, and taking a closer one to the current time as the program time to which the user can play back.

11. A system for real-time control of a PPV service, comprising: a user terminal and an IPTV SCF entity, wherein
the user terminal is configured to: send a live session establishment request to the IPTV SCF entity;
the IPTV SCF entity is configured to: confirm that there is a PPV program that is not subscribed by a user on a current live channel according to the live session establishment request; and is also configured to: notify the user terminal to subscribe the PPV program that is not subscribed.

12. The system of claim 11, wherein
the IPTV SCF entity is further configured to: acquire a subscription URL of the PPV program that is not subscribed, and notify the user terminal to subscribe the PPV program that is not subscribed according to the subscription URL;
correspondingly, the system further comprises:
an IPTV application server, which is configured to: provide the subscription URL of the PPV program that is not subscribed to the IPTV SCF entity; and is also configured to: provide a program playlist of the live channel to the IPTV SCF; and
a user profile server function entity, which is configured to: provide information of a PPV program that is subscribed by the user to the IPTV SCF entity;
correspondingly, the IPTV SCF entity is further configured to: confirm that there is the PPV program not subscribed by the user on the live channel according to the program playlist and the information of the PPV program that is subscribed by the user.

13. The system of claim 12, further comprising:
a Core IMS, which is configured to: send the live session establishment request from the user terminal to the IPTV SCF entity, and is also configured to: send a message including the subscription URL sent from the IPTV SCF entity to the user terminal, so as to notify the user to subscribe the PPV program that is not subscribed.

14. The system of claim 13, when the user terminal needs to play back to view a program that has already been played on the live channel, further comprising: a CC, wherein
correspondingly, the IPTV SCF entity is further configured to: acquire a border point of the PPV program on the live channel from the IPTV application server, and send the border point of the PPV program to the CC;
the CC is configured to: determine a time shift border point, and confirm a program time to which the user plays back according to the border point of the PPV program.

15. A device for real-time control of a PPV service, comprising:
an analysis module, which is configured to: receive a live session establishment request sent from a user terminal, and confirm that there is a PPV program that is not subscribed by a user on a current live channel according to the live session establishment request; and
a processing module, which is configured to: notify the user terminal to subscribe the PPV program that is not subscribed.
